# EUROPÄISCHE PATENTSCHRIFT

(11) **EP 0 644 225 B1**
(45) Veröffentlichungstag und Bekanntmachung des Hinweises auf die Patenterteilung: **29.12.1997**
(21) Anmeldenummer: 94111372.2
(22) Anmeldetag: 21.07.1994
(51) Int. Cl.: C08J 5/12, C08K 5/54

(54) **Verfahren zur Herstellung von Verbundgegenständen aus Polyestern und Elastomeren**
Process for manufacturing composite articles from polyesters and elastomers
Procédé pour la fabrication d'articles composites de polyesters et d'élastomères

(30) Priorität: 21.09.1993 DE 4331995
(43) Veröffentlichungstag der Anmeldung: 22.03.1995
(73) Patentinhaber: HÜLS AKTIENGESELLSCHAFT, 45764 Marl (DE)
(72) Erfinder: Schmidt, Friedrich Georg, Dr., D-45721 Haltern (DE); Heuer, Horst, D-45721 Haltern (DE); Grosse-Puppendahl, Thomas, D-45721 Haltern (DE)

(56) Entgegenhaltungen:
- EP-A- 0 375 867
- GB-A- 2 271 313
- US-A- 3 972 973
- DATABASE WPI Derwent Publications Ltd., London, GB; AN 84-218308[35] & SU-A-1 065 443 (SHIROKOVA L.G.) 7. Januar 1984

## Beschreibung

Die vorliegende Erfindung betrifft ein Verfahren zur Herstellung von Verbundgegenständen aus mindestens einer harten und mindestens einer weichen Komponente, wobei die harte Komponente auf einem thermoplastischen Polyester basiert und die weiche Komponente ein Vulkanisat ist. Die Erfindung betrifft weiterhin die nach diesem Verfahren erhaltenen Gegenstände.

Häufig kann ein einziger Werkstoff nicht alle Eigenschaften beitragen, die von einem Gegenstand verlangt werden. Solche unvereinbaren Eigenschaftskombinationen sind z. B. gleichzeitig hohe Festigkeit und Gummielastizität oder hohe Härte und Steifheit auf einer und Rutschfestigkeit auf der anderen Seite.

Um Bauteile mit Eigenschaften auszurüsten, die ein einziger Werkstoff nicht beitragen kann, setzt man sie aus Teilen verschiedener Werkstoffe zusammen. Für die Funktionstüchtigkeit derartiger Gegenstände ist häufig eine feste Haftung zwischen den Teilen aus verschiedenen Werkstoffen eine notwendige Voraussetzung.

Die technische Aufgabe, Kautschuke und Thermoplaste fest miteinander zu verbinden, ist alt und bisher auf verschiedene, insgesamt nicht befriedigende Arten gelöst.

Verbundwerkstoffe aus thermoplastisch steifen und gummielastischen Formstoffen werden üblicherweise durch Kleben, Verschrauben, Nieten, mechanisches Verkrallen oder unter Verwendung eines Haftvermittlers zusammengefügt. In neuerer Zeit sind interessante Verfahren zur Herstellung eines Verbundes zwischen Formmassen auf Basis von Polyphenylenethern (PPE) und bestimmten, mit Schwefel bzw. Peroxid vulkanisierbaren Kautschuken entwickelt worden (vgl. EP-A-0 196 407 und EP-A-0 315 749).

Die hierbei erzielten Haftfestigkeitswerte sind beachtlich. Nachdem Verbundwerkstoffe der soeben geschilderten Art grundsätzlich herstellbar sind, möchte man aber in der Lage sein, auch Verbundwerkstoffe herzustellen, deren thermoplastische Komponente neben einer hohen Wärmeformbeständigkeit gleichzeitig eine gute Lösemittelbeständigkeit, Stabilität bei Bewitterung sowie ein ausgezeichnetes Gleitreibungsverhalten aufweist.

Obwohl bekannt ist, daß die aus den angeführten Anmeldungen bekannten Verfahren an bestimmte kritische Parameter geknüpft sind, könnte man grundsätzlich daran denken, den Polyphenylenether durch andere Thermoplasten zu ersetzen, die den genannten Anforderungen besser gerecht werden. Es hat sich jedoch gezeigt, daß sich beispielsweise mit Polyestern, die bekanntlich den oben genannten Anforderungen gerecht werden, unter den als wesentlich erkannten Verfahrensbedingungen keine ausreichenden Haftungswerte erzielen lassen (siehe Vergleichsversuche). Es erschien daher nicht möglich, Verbunde zwischen thermoplastischen Polyestern und Kautschuken herzustellen.

In der EP-A-0 375 867 wird ein Verfahren zur Herstellung solcher Verbunde angegeben, bei denen der Thermoplastanteil zu mindestens 30 % aus einem Umsetzungsprodukt aus einem thermoplastischen Polyester und einem Polyisocyanat besteht. Diese Umsetzungsprodukte haben den Nachteil, daß sie bei hinreichend hoher Konzentration an Polyisocyanat nur in einem sehr engen Verarbeitungsfenster spritzgegossen oder extrudiert werden können.

Es wurde jetzt überraschend ein Verfahren gefunden, mit dem Polyester mit einem nicht beeinträchtigten Verarbeitungsverhalten in einem Verbund mit Kautschuken eingesetzt werden können. Dieses besteht darin, daß man eine harte Komponente auf Basis eines thermoplastischen Polyesters verwendet, der aliphatische Doppelbindungen enthält, und bei der weichen Komponente von folgender Kautschukzusammensetzung ausgeht, die im Kontakt mit der harten Komponente unter üblichen Vulkanisationsbedingungen vulkanisiert wird:
I. 100 Gew.-Teile eines Kautschuks,
II. 0 bis 300 Gew.-Teile Füllstoffe,
III. 1 bis 10 Gew.-Teile peroxidische Vulkanisationsmittel,
IV. 0 bis 4 Gew.-Teile Vulkanisationsaktivatoren,
V. 0 bis 150 Gew.-Teile Weichmacher sowie
VI. 0,5 bis 10 Gew.-Teile eines Silans der allgemeinen Formel

   X―R¹―Si(OR²)₃,

   in der R¹ ein beliebiger zweiwertiger Rest oder eine direkte Bindung sein kann, während R² unabhängig voneinander Wasserstoff, Alkyl, Cycloalkyl oder Aryl, jeweils ggf. substituiert, mit jeweils maximal 20 C-Atomen bedeutet. X wird ausgewählt aus
   a) Gruppen der allgemeinen Formel 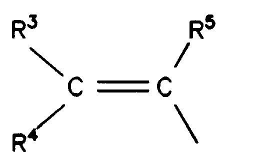 wobei R³, R⁴ und R⁵, unabhängig voneinander, aus den gleichen Resten wie R² ausgewählt werden oder eine Gruppe -COOR² bedeuten; und
   b) Gruppen der allgemeinen Formel 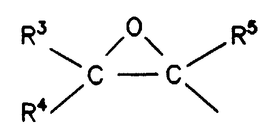 wobei R³, R⁴ und R⁵ die vorstehende Bedeutung besitzen.

Für R¹ wird eine direkte Bindung, eine vorzugsweise lineare Alkylengruppe mit maximal 12 C-Atomen oder eine Carboxyalkylengruppe der Formel 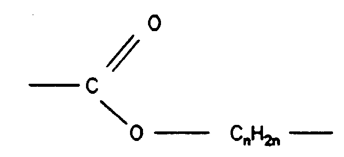 mit n gleich 1 bis 12 bevorzugt.

Für R² wird eine Alkylgruppe mit maximal 8 C-Atomen oder eine entsprechende Alkylgruppe, die durch einen Alkoxyrest mit maximal 6 C-Atomen substituiert ist, bevorzugt.

Für R³, R⁴ und R⁵ wird Wasserstoff, eine Alkylgruppe mit maximal 8 C-Atomen oder eine Arylgruppe mit maximal 10 C-Atomen bevorzugt.

Die Verwendung von Peroxiden und von Silanen in Kautschuk-Compounds ist an sich bekannt.

Peroxide werden Schwefel oder Schwefelspendern als Vulkanisationsmittel vorgezogen, wenn man bei den Vulkanisaten eine hohe Temperaturbeständigkeit erzielen will.

Silane verwendet man in Polymeren wie Kautschuken, Duromeren und Thermoplasten, wenn man eine Anbindung von anorganischen Füllstoffen, z. B. Talkumpulver, Quarzpulver oder Glasfasern, an das organische Polymere bewirken will. Die Hersteller der Füllstoffe liefern in der Regel ihre Produkte fertig mit Silanen oder anderen Schlichten ausgerüstet an die Verwender. Die Verwender mischen die so vorbehandelten Füllstoffe mit den Polymeren und erhalten so verstärkte Formmassen oder verstärkte Compounds. Bei mineralisch hochgefüllten Systemen kann es aber für den Verwender vorteilhaft sein, ungeschlichtete Füllstoffe einzusetzen und das Silan oder andere Schlichten dem Polymeren vor oder gemeinsam mit dem anorganischen Füllstoff im sogenannten "Additivverfahren" zuzumischen. So wird häufig bei der Herstellung von Kautschuk-Compounds verfahren. Diese Compounds enthalten anschließend in der Regel ca. 0,2 bis 2,5 Gew.-% an Silan, bezogen auf den Füllstoff, oder bis ca. 1,5 Gew.-%, bezogen auf das Compound (Firmenschrift "Dynasilan®" der Hüls AG, D-45764 Marl, Ausgabe 7/92, Seite 26). Ein Gehalt von 2 Gew.-% Silan im Compound, bezogen auf den Füllstoff, wird jedoch normalerweise nicht überschritten. Je nach Vernetzersystem werden dabei unterschiedliche Silane, z. B. Mercaptosilane für Schwefelvernetzungen oder Vinylsilane bei Peroxidvernetzungen eingesetzt.

Vorstellungen über Bindungsmechanismen zwischen anorganischen und organischen Komponenten wurden in zahlreichen Publikationen ausgebreitet. Insbesondere sei dazu auf die Firmenschrift der Hüls AG, D-45764 Marl, mit dem Titel "Anwendungen von organofunktionellen Silanen" (Oktober 1989) verwiesen.

Die hier erfindungsgemäß eingesetzten Silane werden hingegen gezielt eingesetzt, um darüber hinaus eine feste Bindung an der Grenzfläche Thermoplast/Vulkanisat zu erzielen. Hierzu sind insgesamt größere Mengen nötig als zur bloßen Anbindung anorganischer Füll- und Verstärkungsstoffe.

Über den hier wirksamen Bindungsmechanismus zwischen Polyester und Vulkanisat liegen noch keine gesicherten Erkenntnisse vor.

Im folgenden sollen die einzelnen Bestandteile der harten und der weichen Komponente näher erläutert werden.

Die harte Komponente auf Basis von Polyester kann ein Polyester, eine Polyesterformmasse, ein Polyesterblend oder ein Faserverbundwerkstoff mit Polyestermatrix sein.

Hierbei wird der aliphatische Doppelbindungen enthaltende thermoplastische Polyester in bekannter Weise durch Umesterung bzw. Veresterung von aromatischen Dicarbonsäuren mit 8 bis 14 C-Atomen bzw. deren Estern mit geeigneten Diolen und anschließender Polykondensation hergestellt [vgl. "Polymer Chemistry", Interscience Publ., New York, 1961, S. 111 - 127; Kunststoffhandbuch, Band VIII, C. Hanser Verlag, München, 1973 und Journal of Polymer Science, Part A1, **4**, Seiten 1851 - 1859 (1966)].

Geeignete aromatische Dicarbonsäuren sind z. B. Phthalsäure, Iso- und Terephthalsäure bzw. deren Ester. Die aromatischen Dicarbonsäuren können teilweise durch aliphatische und/oder cycloaliphatische Dicarbonsäuren mit bis zu 12 C-Atomen ersetzt sein. Beispielhaft seien Cyclohexan-1,4-dicarbonsäure, Adipinsäure, Sebacinsäure, Azelainsäure und Decandicarbonsäure als gesättigte Dicarbonsäuren sowie Maleinsäure, Fumarsäure, Aconitsäure, Itaconsäure, Tetrahydrophthalsäure, Tetrahydroisophthalsäure und Tetrahydroterephthalsäure als ungesättigte Dicarbonsäuren genannt.

Als Diolkomponente eignen sich beispielsweise
- Diole der allgemeinen Formel HO-(CH₂)ₙ-OH mit n = 2 bis 12, wie z. B. Ethylenglykol, Propandiol-(1,3), Butandiol-(1,4) und Hexandiol-(1,6),
- Neopentylglykol,
- 1,4-Cyclohexandimethanol,
- ungesättigte Diole, wie z. B. Butendiol-(1,4).

Ein Teil dieser Diole kann durch ein Poly(oxyalkylen)diol mit einem Molekulargewicht bis 3 000, wie z. B. Poly(oxyethylen)diol oder Poly(oxytetramethylen)diol, oder durch verzweigte Alkylendiole, wie z. B. 2-Methyl-1,4-butandiol, ersetzt sein.

Die erfindungsgemäß eingesetzten Polyester weisen sinnvollerweise eine Viskositätszahl J, gemessen nach DIN 53 728 bei 25 °C an einer Lösung in Phenol/1,2-Dichlorbenzol (50 : 50, w/w) mit einer Konzentration von 5 g/l, im Bereich von 80 bis 240 cm³/g auf.

In einer bevorzugten Ausführungsform basiert die Dicarbonsäurekomponente dieses Polyesters auf Terephthalsäure.

In einer besonders bevorzugten Ausführungsform verwendet man Polyester mit einer Dicarbonsäurekomponente auf Basis von Terephthalsäure und einer Diolkomponente, die zu 0 bis 99,9 Mol-% aus Butandiol-(1,4) und zu 0,1 bis 100 Mol-% aus Butendiol-(1,4) besteht. Besonders bevorzugt besteht die Diolkomponente aus 50 bis 99 Mol-% Butandiol-(1,4) und 1 bis 50 Mol-% Butendiol-(1,4).

Selbstverständlich kann der Doppelbindungsgehalt des Polyesters dadurch eingestellt werden, daß man eine Mischung eines doppelbindungshaltigen und beispielsweise eines doppelbindungsfreien Polyesters verwendet.

Polyesterformmassen im Sinne dieser Erfindung sind dem Stand der Technik entsprechende Aufbereitungen von Polyestern, die zur Verbesserung der Verarbeitungseigenschaften oder zur Modifizierung der Gebrauchseigenschaften vorgenommen wurden. Polyesterformmassen enthalten z. B. Stabilisatoren, Gleitmittel, Füllstoffe wie etwa Ruß, Graphit, Metallflitter, Titandioxid und Zinksulfid, Verstärkungsmittel wie etwa Glas-, Kohle-, Aramid- oder Metallfasern, Weichmacher, Farbstoffe und/oder Flammschutzmittel. Der Anteil der Verstärkungsmittel in den Formmassen kann bis zu 50 Gew.-%, der der Flammschutzmittel bis zu 20 Gew.-% und der aller übrigen Zusatzstoffe insgesamt bis zu 10 %, jeweils bezogen auf die gesamte Formmasse, betragen.

Polyesterblends im Sinne dieser Erfindung sind Formmassen, die aus Polyestern und anderen Polymeren sowie den bei den Polyesterformmassen gebräuchlichen Additiven zusammengesetzt sind. Die Polymerbestandteile können ineinander löslich sein oder der eine Polymerbestandteil in dem anderen dispers verteilt sein, oder beide können miteinander interpenetrierende Netzwerke bilden.

Im Rahmen der vorliegenden Erfindung kann prinzipiell jedes bekannte Polyesterblend verwendet werden. Als Beispiele seien genannt: PBT/PC- oder PET/PC-Blends, schlagzähmodifizierte Polyester, die als Schlagzähkomponente etwa MSA- oder glycidylmethacrylatmodifizierte Kautschuke enthalten, Polyester/Polyamid-Blends, Blends aus Polyestern und Polyolefinen sowie Blends aus Polyestern und PMMA, PMMI, ABS, Epoxyharzen oder Blockcopolyetherester-Elastomeren. Beschrieben sind derartige Systeme beispielsweise in folgenden Publikationen: Polymer Blends, Ed.: E. Martuscelli, R. Palumbo und M. Kryszewski, Plenum Press, New York, 1980; Polymer Alloys III, Ed.: D. Klempner und K. C. Frisch, Plenum Press, New York, 1983; WO-A-87/00850; EP-A-0 037 547; EP-A-0 276 327 sowie H. Saechtling, Kunststoff-Taschenbuch, 25. Auflage, C. Hanser Verlag, München, Wien, 1992.

Der Polyesteranteil in den Polyesterblends sollte hierbei, bezogen auf die Summe aller polymeren Komponenten, mindestens 30 Gew.-% betragen.

Als Faserverbundwerkstoffe mit Polyestermatrix sollen Werkstoffe verstanden werden, die aus ungeschnittenen Verstärkungsfasern oder Geweben daraus einerseits und einer Matrix aus Polyestern, Polyesterformmassen oder Polyesterblends andererseits zusammengesetzt sind.

Faserverbundwerkstoffe mit einer Matrix aus Polyestern, Polyesterformmassen oder Polyesterblends können auf verschiedene Weise hergestellt werden; beispielsweise können mit Polyestern imprägnierte Verstärkungsfasern oder Verstärkungsgewebe - sogenannte Prepregs - durch Druck und Temperatur zu Laminatplatten konsolidiert werden. Es ist auch möglich, hybride Garne aus Polyesterfasern und Verstärkungsfasern, oder Filme aus den genannten Thermoplasten und Gewebe aus Verstärkungsfasern unter Druck und Temperatur zu Verbundwerkstoffen zu verarbeiten. Geeignete Verstärkungsfasern sind z. B. Glasfasern, Kohlenstoffasern und Aramidfasern.

Der für die weiche Komponente verwendete Kautschuk kann beispielsweise ein EP(D)M-Kautschuk, ein SB-Kautschuk (als E-SBR oder L-SBR), BR, NR, IR, IIR, CIIR, BIIR, NBR, CR, ein styrolhaltiges Blockcopolymer und/oder ein Polyalkenylen sein.

EP(D)M-Kautschuke sind Kautschuke, die in bekannter Weise durch Polymerisation eines Gemisches aus Ethylen und Propylen und gegebenenfalls eines Diens in Gegenwart eines Ziegler-Natta-Katalysators hergestellt werden.

Der EPDM-Kautschuk wird durch Polymerisation eines Gemisches aus
mehr als 25 Gew.-% Ethylen
mehr als 25 Gew.-% Propylen und
bis 10 Gew.-%, insbesondere 1 bis 3 Gew.-% eines vorzugsweise nicht konjugierten Diens wie Bicyclo(2.2.1)-heptadien, Hexadien-1,4, Dicyclopentadien und insbesondere 5-Ethylidennorbornen
hergestellt.

Beim SB-Kautschuk kann es sich sowohl um E- als auch um L-SBR mit einem Styrolanteil bis maximal etwa 40 Gewichtsprozent handeln.

E-SBR wird in bekannter Weise durch Polymerisation in Emulsion hergestellt, während L-SBR durch Polymerisation in Lösung hergestellt wird.

Butadienkautschuk (BR) kann in bekannter Weise beispielsweise durch Polymerisation mit Hilfe von Li- oder Co-Katalysatoren hergestellt werden. Die Verknüpfungsart hat hierbei keinen Einfluß auf die Eignung.

Naturkautschuk (NR) wird üblicherweise in der cis-1,4-Konfiguration verwendet. Jedoch ist im Rahmen dieser Erfindung auch die trans-1,4-Konfiguration geeignet.

Isoprenkautschuk (IR) kann unabhängig davon verwendet werden, ob er z. B. mit Ti- oder Li-Katalysatoren hergestellt wurde. Der cis-1,4/trans-1,4- bzw. 1,2- und 3,4-Gehalt hat keinen Einfluß auf die Haftungseigenschaften.

Isobuten-Isopren-Kautschuk (IIR) kann als solcher oder in halogenierter Form (CIIR bzw. BIIR) verwendet werden.

Nitrilkautschuk (NBR) wird durch Copolymerisation von Butadien und Acrylnitril in Masseverhältnissen von ca. 51 : 48 bis 82 : 18 gewonnen. Seine Herstellung erfolgt praktisch ausschließlich in wäßriger Emulsion. Die dabei resultierenden Emulsionen werden für den Einsatz im Rahmen dieser Erfindung zum Festkautschuk aufgearbeitet.

Chloroprenkautschuk (CR) wird üblicherweise durch radikalische Emulsionspolymerisation hergestellt. Dabei wird das Monomere in unterschiedlichen Strukturen in das Polymer eingebaut. Der cis-1,4/trans-1,4- bzw. 1,2- und 3,4-Gehalt bzw. der Anteil an Kopf/Kopf- und Kopf/Schwanz-Verknüpfung hat keinen Einfluß auf die Haftungseigenschaften.

Als styrolhaltiges Blockcopolymer können alle bekannten Typen auf Basis von Styrol/Butadien oder Styrol/Isopren verwendet werden. Beispiele hierfür sind SB, SBS und SIS sowie entsprechende Typen, die eine größere Anzahl von Blöcken enthalten. Die Copolymeren können hierbei linear oder verzweigt sein. Darüber hinaus kann die Weichphase hydriert sein; entsprechende Blockcopolymere werden auch als Styrol-Ethylen-Butylen-Styrol-Blockcopolymere (SEBS) bezeichnet.

Polyalkenylene werden durch ringöffnende bzw. ringerweiternde Polymerisation von Cycloalkenen dargestellt [siehe K. J. Ivin, T. Saegusa, "Ring-opening Polymerisation", Vol. 1, Elsevier Appl. Sci. Publishers, London, insbesondere Seiten 121 bis 183 (1984)]. Hiervon werden Polyoctenylene bevorzugt (vgl. A. Dräxler, Kautschuk + Gummi, Kunststoff 1981, Seiten 185 bis 190). Polyoctenylene mit unterschiedlichen Anteilen an cis- und trans-Doppelbindungen sowie unterschiedlichen Molekulargewichten sind nach literaturbekannten Methoden erhältlich.

Im Rahmen dieser Erfindung wird bevorzugt ein Kautschuk verwendet, der aus 30 bis 100 Gew.-Teilen eines EP(D)M-Kautschuks und 70 bis 0 Gew.-Teilen anderer Kautschuke besteht.

Als Füllstoffe eignen sich alle Stoffe, die üblicherweise in Kautschuken eingesetzt werden, wie z. B. Ruß, Kieselsäure, Silikate, Calciumcarbonat, Zinkoxid und Talkum. Bei Verwendung hochaktiver Füllstoffe wird zum Erreichen einer Verbundhaftung eine erhöhte Silanmenge benötigt.

Geeignete Weichmacher sind insbesondere naphthenische und/oder aliphatische Öle oder spezielle, in der Kautschuktechnologie übliche Weichmacher wie z. B. Polyalkoholfettsäureester oder Thioether in einer Menge von vorzugsweise bis zu 50 Gewichtsteilen, bezogen auf 100 Gewichtsteile Kautschuk.

Geeignete peroxidische Vulkanisationsmittel sind die dem Fachmann zur Vernetzung von EP(D)M-Kautschuken bekannten Peroxide wie z. B. 2,5-Dimethyl-2,5-bis(tert.-butylperoxy)-hexan, Dicumylperoxid, 4,4-Di-tert.-butylperoxy-n-butylvalerat, 1,1-Di-tert.-butylperoxy-3,3,5-trimethyl-cyclohexan und Bis(tert.-butylperoxyisopropyl)benzol. Einzelheiten zum Einsatz von peroxidischen Vulkanisationsmitteln sind der Firmenbroschüre "Rubbery Chemical-Crosslinking-Peroxides" der Akzo-Chemie (Erscheinungsdatum: April 1985) zu entnehmen.

Als Vulkanisationsaktivatoren eignen sich beispielsweise Triallylcyanurat (TAC) und Acrylate wie Ethylenglykoldimethacrylat (EDMA), Butandiol-dimethacrylat (BDMA) und Trimethylolpropantrimethacrylat (TRIM). Bevorzugt werden TAC, BDMA und/oder EDMA.

Geeignete Silane sind beispielsweise vom Typ Vinyltrimethoxy- und -triethoxysilan, Vinyl-tris(2-methoxy-ethoxy)silan, 3-Methacryloxypropyl-trimethoxy- und triethoxysilan sowie Glycidyl-oxypropyltrimethoxysilan. Sie werden, bezogen auf 100 Gew.-Teile Kautschuk, vorzugsweise zu 1 bis 8 Gew.-Teilen und besonders bevorzugt zu 2 bis 6 Gew.-Teilen eingesetzt.

Die Kautschukzusammensetzungen können darüber hinaus weitere Zusätze enthalten, wie z. B. Vulkanisationsverzögerer, Alterungsschutzmittel, Verarbeitungshilfsmittel, Entformungsmittel und/oder Treibmittel. In der Regel machen diese weiteren Zusätze, bezogen auf 100 Gew.-Teile Kautschuk, maximal 50 Gew.-Teile aus. Die Herstellung solcher Compounds wird beispielsweise von F.W. Barrow in "Rubber Compounding", erschienen 1988 bei Marcel Dekker Inc., New York und Basel, oder bei W. Kleemann in "Mischungen für die Elastverarbeitung", erschienen 1982 (VEB Deutscher Verlag für Grundstoffindustrie), beschrieben.

Der Verbund aus der harten Komponente auf Polyesterbasis und der elastomeren Komponente wird durch Vulkanisation des Kautschuk-Compounds im Kontakt mit der harten Komponente hergestellt.

Die Gegenstände aus den Polyestern, Polyesterformmassen oder Polyesterblends einerseits und Kautschuk-Compounds andererseits können hierbei einstufig oder zweistufig hergestellt werden. Gegenstände aus Faserverbundwerkstoffen und Kautschuk-Compounds werden zweistufig hergestellt.

Beim zweistufigen Prozeß wird zunächst das steife Formteil beispielsweise durch Spritzgießen, Extrudieren oder Konsolidieren von Prepregs hergestellt und in einem zweiten Schritt mit dem ggf. vorgeformten Kautschuk-Compound beaufschlagt und den Vulkanisationsbedingungen des Kautschuks ausgesetzt. Das Beaufschlagen des steifen Formteils mit dem Kautschuk kann durch Pressen, Spritzgießen oder Extrudieren geschehen.

Beim zweistufigen Spritzgießverfahren geht man ähnlich vor wie bei der zweistufigen Herstellung von Zweifarbenspritzteilen. Als Einlegeteil verwendet man ein Formteil der genannten harten Werkstoffe. Zylinder und Schnecken der Spritzgießmaschine sind in bekannter Weise für die Kautschukverarbeitung ausgelegt und das Werkzeug auf Vulkanisationstemperatur beheizbar. Wenn äußere Entformungshilfsmittel verwendet werden, so ist dafür Sorge zu tragen, daß sie nicht in die Grenzschicht der Werkstoffe gelangen, da sie die Verbundhaftung beeinträchtigen können.

Beim Beaufschlagen und Ausvulkanisieren nach dem zweistufigen Extrusionsverfahren wird z. B. ein in der ersten Stufe hergestelltes Profil aus dem Thermoplasten, etwa ein Rohr, mit der Kautschukmasse ummantelt und gegebenenfalls unter Druck ausvulkanisiert. Entsprechend verfährt man mit Platten, Vliesen, Geweben und Seilen.

Beim einstufigen Spritzgießverfahren arbeitet man analog zum einstufigen Zweifarbenspritzgießverfahren. In diesem Fall ist eine Spritzgießmaschine für die Thermoplastverarbeitung, die andere für die Kautschukverarbeitung ausgerüstet. Das Werkzeug wird auf die vorgegebene Vulkanisiertemperatur aufgeheizt, die unter der Erstarrungstemperatur des Polyesters, der Polyesterformmasse bzw. des Polyesterblends liegen sollte.

Die optimalen Vulkanisationsbedingungen hängen von der gewählten Kautschukmischung, insbesondere ihrem Vulkanisationssystem, und der Formteilgestaltung ab. Dabei kann man sich auf die bekannten Erfahrungswerte stützen, denn das Additiv Silan beeinflußt die Reaktionsbedingungen nicht.

Geeignete Massetemperaturen der Kautschukmischung im Zylinder liegen im allgemeinen im Bereich von 40 bis 80 °C, vorzugsweise von 60 bis 70 °C.

Geeignete Vulkanisationstemperaturen richten sich nach den Erweichungstemperaturen der Einlegeteile. Sie liegen im allgemeinen im Bereich von 140 bis 200 °C. Wenn die Erweichungsbereiche der Einlegeteile es zulassen, wählt man Temperaturen im oberen Bereich, z. B. zwischen 170 und 190 °C. Die Vulkanisationszeiten richten sich außer nach der Kautschukmischung nach den Vulkanisationstemperaturen und nach der Geometrie der Teile. Sie liegen im allgemeinen zwischen 30 s und 30 min; niedrigere Temperaturen und dickere Kautschukteile erfordern längere Zeiten.

Das erfindungsgemäße Verfahren sowie die damit hergestellten Verbunde zeichnen sich durch folgende Vorteile aus:
- Der Verbund ist vorzugsweise in wenigen Minuten hergestellt.
- Die im Verbundsystem eingesetzten Polyester besitzen eine hohe Wärmeformbeständigkeit, gute Lösemittelbeständigkeit, ein ausgezeichnetes Gleitreibungsverhalten sowie eine nur geringe Wasseraufnahme und sind auch im Außenbereich problemlos einsetzbar.
- Der Verbund ist so stark, daß es im Testfall zu einem Kohäsionsbruch im Gummi, nicht jedoch zu einer Trennung an der Phasengrenzfläche kommt.

Aus den Verbunden lassen sich beispielsweise folgende Gegenstände herstellen: gummibeschichtete Walzen, Flansche, Rohr- und Schlauchkupplungen, Dichtungsrahmen, stoß- und strahlungsabsorbierende Bauteile, Federelemente, Schwingungsdämpfer, verstärkte Gummiprofile, Transportbänder, Antriebsriemen, Andruckrollen für Video- und Audio-Band-Geräte, Dichtungen, insbesondere Wellendichtringe, Laufrollen, Kupplungs- und Bremsscheiben, Membranen, Kolben mit Dichtringen, verstärkte Faltenbälge, Pumpengehäuse und -klappen, polyesterverstärkte Gummischläuche etc.

Im folgenden soll die Erfindung beispielhaft erläutert werden.

### Beispiele

Für die Herstellung der Kautschukmischung wurden folgende Materialien verwendet:
BUNA HÜLS AP 341, ein statistischer EPDM-Kautschuk (Hüls AG, D-45764 Marl) mit einer Mooney-Viskosität von ML (1 + 4) 100 °C = 70.
- Durex 0:: Ruß der Fa. Degussa mit einem CTAB-Wert von 20 m²/g.
- Corax N 220:: Ruß der Fa. Degussa mit einem CTAB-Wert von 111 m²/g.
- Corax N 550:: Ruß der Fa. Degussa mit einem CTAB-Wert von 43 m²/g.
- Omyalite:: Calciumcarbonat der Fa. Omya, Köln, mit einer spez. Oberfläche von ca. 7,5 m²/g.
- Sillitin Z86:: Aluminium-Silikat der Fa. Hoffmann Mineral, Neuburg, Donau mit einer spez. Oberfläche von ungefähr 14 m²/g.
- ZnO RS:: Zinkoxid der Fa. Carl Arnsberger, Köln
- Vulkanox HS:: polymerisiertes 2,2,4-Trimethyl-1,2-dihydrochinolin der Fa. Rhein-Chemie, Rheinau
- BDMA:: Butandioldimethacrylat, 75 % auf Ca-Silikat der Fa. Lehmann & Voss
- Perkadox 14/40:: Bis-tert.-butylperoxy-isopropylbenzol, 40%ig auf Kreide und SiO₂ der Fa. Akzo Chemicals, Düren
- DYNASILAN MEMO:: Methacryl-oxpropyl-trimethoxysilan der Fa. Hüls, Troisdorf
- DYNASILAN AMEO:: Aminopropyltriethoxysilan der Fa. Hüls, Troisdorf
- DYNASILAN VTMOEO:: Vinyl-tri(methoxy-ethoxy)silan der Fa. Hüls, Troisdorf
- DYNASILAN GLYMO:: Glycidyl-oxypropyltrimethoxysilan der Fa. Hüls, Troisdorf
- DYNASILAN DAM0:: N-Aminoethyl-3-aminopropyl-trimethoxysilan der Fa. Hüls, Troisdorf
- Sunpar 2280:: paraffinisch (73 %)-naphthenisches (23 %)-aromatisches (4 %) Öl der Fa. Sun Oil, Belgien

Als Polyestermaterialien wurden folgende Formmassen eingesetzt:
Typ A (nicht erfindungsgemäß) entspricht einem normalen Polybutylenterephthalat, VESTODUR 1000 der Hüls AG, D-45764 Marl mit einer Lösungsviskosität J von 108 cm³/g.
Typ B entspricht Polybutylenterephthalat mit einem copolykondensierten Anteil von 1 Mol-% 1,4-Buten-2-diol mit einer Lösungsviskosität J von 105 cm³/g.
Typ C entspricht Polybutylenterephthalat mit einem copolykondensierten Anteil von 5 Mol-% 1,4-Buten-2-diol mit einer Lösungsviskosität J von 106 cm³/g.
Typ D entspricht Polybutylenterephthalat mit einem copolykondensierten Anteil von 10 Mol-% 1,4-Buten-2-diol mit einer Lösungsviskosität J von 105 cm³/g.
Typ E entspricht Polybutylenterephthalat mit einem copolykondensierten Anteil von 20 Mol-% 1,4-Buten-2-diol mit einer Lösungsviskosität J von 106 cm³/g.
Typ F (nicht erfindungsgemäß) entspricht Polybutylenterephthalat mit einem Gewichtsanteil von 30 % Schnittglasfasern, VESTODUR GF30 der Hüls AG, D-45764 Marl, mit einer Lösungsviskosität von 108 cm³/g.
Typ G (nicht erfindungsgemäß) entspricht Polybutylenterephthalat mit einem Gewichtsanteil von 30 % Glaskugeln, VESTODUR GK30 der Hüls AG, D-45764 Marl, mit einer Lösungsviskosität J von 104 cm³/g.

### Herstellung der Kautschukmischungen

Die Herstellung der einzelnen Kautschukmischungen I bis XV erfolgte in einem Batch-Labor-Meßkneter (Fa. Haake). Bei einer Starttemperatur von 60 °C und einer Drehzahl von 64 Upm wurde zunächst 28,57 g BUNA HÜLS AP 341 plastifiziert. Innerhalb von etwa fünf Minuten wurden 5,71 g Sunpar 2280, der in der Tabelle 1 angegebene Füllstoff, 1,43 g Zn0 RS und 0,57 g Vulkanox HS eingearbeitet und weitere drei Minuten homogenisiert. Während dieser Zeit stieg die Temperatur auf ca. 110 °C an. Diese Vormischung wurde anschließend ≥ 24 h bei Raumtemperatur gelagert. Anschließend wurden bei gleichen Bedingungen (60 °C Starttemperatur, 64 Upm) 1,71 g Perkadox 14/40, 0,43 g BDMA sowie das in der Tabelle 1 angegebene Silan innerhalb von ca. vier Minuten homogen eingearbeitet. Dabei stieg die Temperatur der Mischung nicht über 130 °C an.

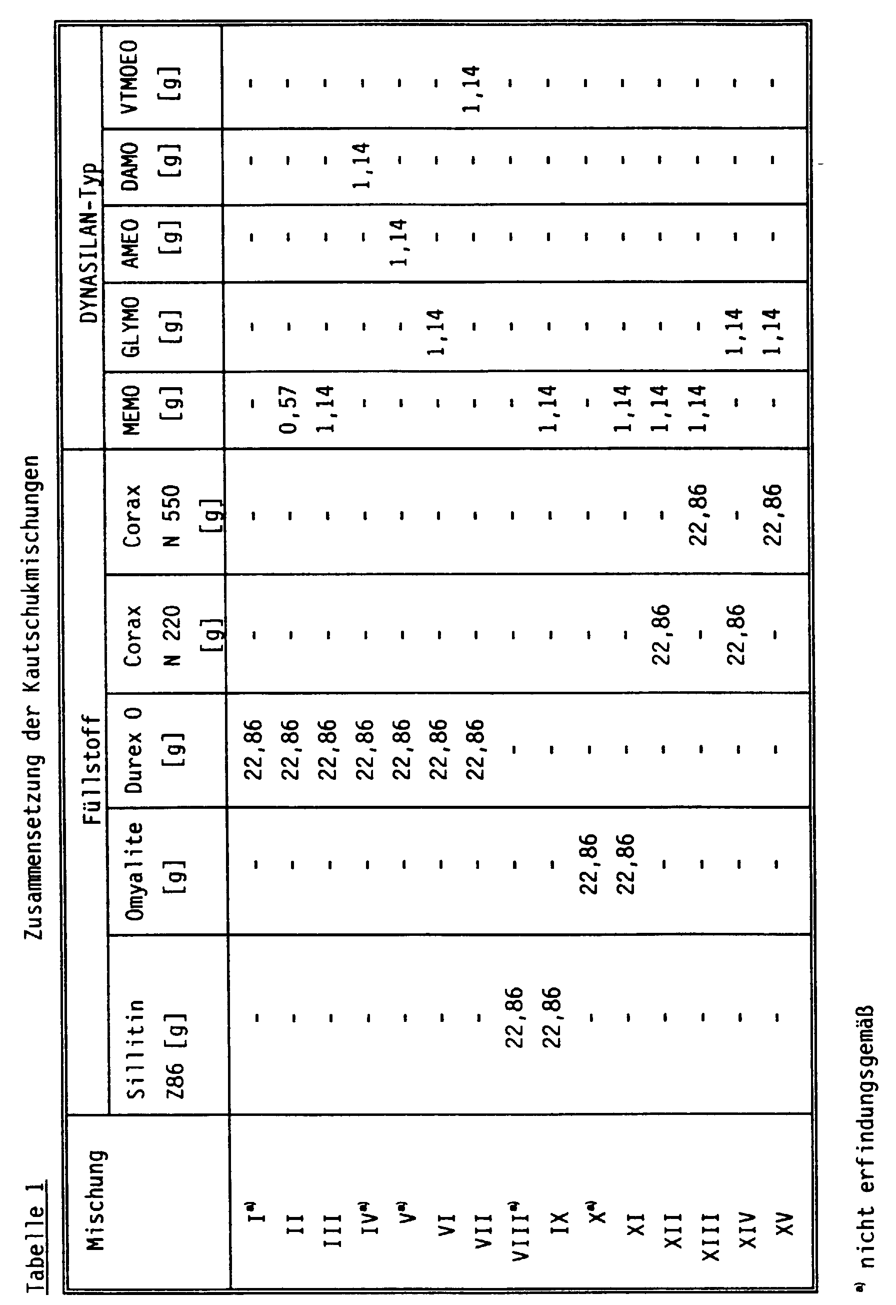

### Herstellung der Verbunde

Von den untersuchten Polyestern wurden Prüfkörper (100 x 100 x 4 mm) im Spritzgießverfahren bei einer Zylindertemperatur von 250 °C hergestellt. Anschließend wurde eine Platte in eine Form aus V2A-Stahl (100 x 100 x 8 mm) gelegt und mit einem 20 mm breiten Stück PTFE-Folie an einer Seite abgedeckt. Die Gesamtfläche wurde mit der zu prüfenden Kautschukmischung bedeckt. Die so präparierte Platte wurde in einer hydraulischen Presse (Schwabenthan - Polystat 200T) 20 Minuten bei 180 °C und 200 bar verpreßt.

### Prüfung der Verbundhaftung

Die Prüfung der Verbundhaftung zwischen Polyestermaterial und vulkanisiertem Kautschuk wurde mittels eines Schälversuches in Anlehnung an DIN 53 531 durchgeführt. Dabei wurde das Gummiteil, das durch die Teflonfolie bei der Vulkanisation vom Polyestermaterial getrennt gehalten wurde, so eingespannt, daß bei den Schälversuchen der Gummistreifen senkrecht zu der Thermoplastfläche abgezogen wurde. Die Ergebnisse sind in der Tabelle 2 wiedergegeben, wobei die Beurteilung folgendermaßen vorgenommen wurde:
- H: Haftung (Bruch im Kautschuk, d. h. kohäsiver Bruch; hohe Trennkraft)
- -: Nicht-Haftung (Bruch in der Grenzfläche zwischen Gummi und Polyester, d. h. adhäsiver Bruch; geringe bis sehr geringe Trennkraft)
- t: teilweise Haftung (Grenzbereich zwischen kohäsivem und adhäsivem Bruch; mittlere Trennkraft)

**Tabelle 2**

| Prüfung der Verbundhaftung | | | | | | | | |
|---|---|---|---|---|---|---|---|---|
| Beispiel | Kautschukmischung | Formmasse | | | | | | |
| | | A^{a)} | B | C | D | E | F^{a)} | G^{a)} |
| 1 | I^{a)} | - | - | - | - | - | - | - |
| 2 | II | - | - | - | - | H | - | - |
| 3 | III | - | H | H | H | H | t | t |
| 4 | IV^{a)} | - | - | - | - | - | - | - |
| 5 | V^{a)} | - | - | - | - | - | - | - |
| 6 | VI | - | t | H | H | H | - | - |
| 7 | VII | - | t | H | H | H | t | t |
| 8 | VIII^{a)} | - | - | - | - | - | - | - |
| 9 | IX | - | - | - | H | H | t | t |
| 10 | X^{a)} | - | - | - | - | - | - | - |
| 11 | XI | - | - | - | H | H | t | t |
| 12 | XII | - | - | - | t | H | - | - |
| 13 | XIII | - | t | H | H | H | t | t |
| 14 | XIV | - | - | t | H | H | - | - |
| 15 | XV | - | t | t | H | H | - | - |

| | | | | | | | | |
|---|---|---|---|---|---|---|---|---|
| ^{a)} nicht erfindungsgemäß | | | | | | | | |

Die Beispiele 3, 7, 9, 11 und 13 zeigen, daß bei Verwendung verstärkter bzw. gefüllter Formmassen (Formmassen F und G) auch dann eine teilweise Haftung erhalten werden kann, wenn die Formmasse auf einem Standardpolyester basiert. Dies kann auf folgende Weise ausgenutzt werden:
1) Bei Verwendung einer verstärkten bzw. gefüllten Formmasse wird ein geringerer Doppelbindungsanteil im Polyester benötigt, um einen festen Verbund zu ergeben; oder
2) verwendet man eine verstärkte bzw. gefüllte Formmasse mit einem relativ hohen Doppelbindungsanteil im Polyester, so wird die für die Herstellung eines festen Verbundes benötigte Silanmenge verringert.

## Patentansprüche

1. Verfahren zur Herstellung von Verbundgegenständen aus mindestens einer harten und mindestens einer weichen Komponente, wobei die harte Komponente auf einem thermoplastischen Polyester basiert und die weiche Komponente ein Vulkanisat ist,
dadurch gekennzeichnet, daß
a) der thermoplastische Polyester aliphatische Doppelbindungen enthält und
b) das Vulkanisat unter üblichen Vulkanisationsbedingungen im Kontakt mit der harten Komponente durch Vulkanisation einer Kautschukzusammensetzung hergestellt wird, die folgende Komponenten enthält:
I. 100 Gew.-Teile eines Kautschuks,
II. 0 bis 300 Gew.-Teile Füllstoffe,
III. 1 bis 10 Gew.-Teile peroxidische Vulkanisationsmittel,
IV. 0 bis 4 Gew.-Teile Vulkanisationsaktivatoren,
V. 0 bis 150 Gew.-Teile Weichmacher sowie
VI. 0,5 bis 10 Gew.-Teile eines Silans der Formel
X―R¹―Si(OR²)₃,
wobei R¹ ein beliebiger zweiwertiger Rest oder eine direkte Bindung ist, während R² Wasserstoff, Alkyl, Cycloalkyl oder Aryl, jeweils ggf. substituiert, mit jeweils maximal 20 C-Atomen bedeutet; und
X aus den beiden nachstehenden Formeln ausgewählt wird, 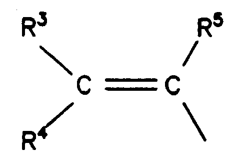 oder 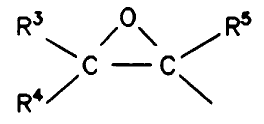 wobei R³, R⁴ und R⁵ unabhängig voneinander die gleiche Bedeutung wie R² haben oder eine Gruppe -COOR² bedeuten.

2. Verfahren gemäß Anspruch 1,
dadurch gekennzeichnet,
daß die harte Komponente ein Polyester, eine Polyesterformmasse, ein Polyesterblend oder ein Faserverbundwerkstoff mit Polyestermatrix ist.

3. Verfahren gemäß einem der vorhergehenden Ansprüche,
dadurch gekennzeichnet,
daß die Dicarbonsäurekomponente des aliphatische Doppelbindungen enthaltenden thermoplastischen Polyesters auf Terephthalsäure basiert.

4. Verfahren gemäB Anspruch 3,
dadurch gekennzeichnet,
daß die Diolkomponente zu 0 bis 99,9 Mol-% aus Butandiol-(1,4) und zu 0,1 bis 100 Mol-% aus Butendiol-(1,4), vorzugsweise zu 50 bis 99 Mol-% aus Butandiol-(1,4) und 1 bis 50 Mol-% aus Butendiol-(1,4) besteht.

5. Verfahren gemäß einem der vorhergehenden Ansprüche,
dadurch gekennzeichnet,
daß 1 bis 8 Gew.-Teile eines Silans, bevorzugt 2 bis 6 Gew.-Teile, bezogen auf 100 Gew.-Teile Kautschuk, eingesetzt werden.

6. Verfahren gemäß einem der vorhergehenden Ansprüche,
dadurch gekennzeichnet,
daß der Kautschuk ein EP(D)M-Kautschuk, E-SBR, L-SBR, BR, NR, IR, IIR, CIIR, BIIR, NBR, CR, ein styrolhaltiges Blockcopolymer und/oder ein Polyalkenylen ist.

7. Verfahren gemäß einem der vorhergehenden Ansprüche,
dadurch gekennzeichnet,
daß der Kautschuk aus 30 bis 100 Gew.-Teilen eines EP(D)M-Kautschuks und 70 bis 0 Gew.-Teilen anderer Kautschuke besteht.

8. Verfahren gemäß einem der vorhergehenden Ansprüche,
dadurch gekennzeichnet,
daß die Kautschukzusammensetzung darüber hinaus Vulkanisationsverzögerer, Alterungsschutzmittel, Verarbeitungshilfsmittel, Entformungsmittel und/oder Treibmittel enthält.

9. Verfahren gemäß einem der vorhergehenden Ansprüche,
dadurch gekennzeichnet,
daß der Verbund im einstufigen oder im zweistufigen Prozeß hergestellt wird, wobei die Massetemperatur der Kautschukmischung im Zylinder im Bereich zwischen 40 und 80 °C und die Vulkanisationstemperatur im Bereich zwischen 140 und 200 °C liegen.

10. Verbundgegenstände, hergestellt nach einem der vorhergehenden Ansprüche.

## Claims

1. A process for the production of composite articles of at least one rigid and at least one flexible component, the rigid component being based on a thermoplastic polyester and the flexible component being a vulcanizate,
characterized in that
a) the thermoplastic polyester contains aliphatic double bonds and
b) the vulcanizate is prepared under customary vulcanization conditions in contact with the rigid component by vulcanization of a rubber composition which comprises the following components:
I. 100 parts by weight of a rubber,
II. from 0 to 300 parts by weight of fillers,
III. from 1 to 10 parts by weight of peroxidic vulcanization agents,
IV. from 0 to 4 parts by weight of vulcanization activators,
V. from 0 to 150 parts by weight of plasticizer and
VI. from 0.5 to 10 parts by weight of a silane of the formula
X ― R¹ ― Si(OR²)₃ ,
where R¹ is any desired divalent radical or a direct bond, while R² is hydrogen, alkyl, cycloalkyl or aryl, in each case unsubstituted or substituted, having in each case not more than 20 C atoms; and
X is chosen from the two following formulae 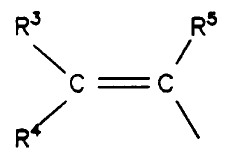 or 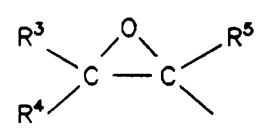 where R³, R⁴ and R⁵ independently of one another have the same meaning as R² or denote a group -COOR².

2. A process according to claim 1, characterized in that the rigid component is a polyester, a polyester moulding composition, a polyester blend or a fibre composite material with a polyester matrix.

3. A process according to one of the preceding claims, characterized in that the dicarboxylic acid component of the thermoplastic polyester containing aliphatic double bonds is based on terephthalic acid.

4. A process according to claim 3, characterized in that the diol component comprises butane-1,4-diol to the extent of from 0 to 99.9 mol % and butene-1,4-diol to the extent of from 0.1 to 100 mol %, preferably butane-1,4-diol to the extent of from 50 to 99 mol % and butene-1,4-diol to the extent of from 1 to 50 mol %.

5. A process according to one of the preceding claims, characterized in that from 1 to 8 parts by weight of a silane, preferably from 2 to 6 parts by weight, are employed per 100 parts by weight of rubber.

6. A process according to one of the preceding claims, characterized in that the rubber is an EP(D)M rubber, E-SBR, S-SBR, BR, NR, IR, IIR, CIIR, BIIR, NBR, CR, a styrene-containing block copolymer and/or a polyalkenylene.

7. A process according to one of the preceding claims, characterized in that the rubber consists of from 30 to 100 parts by weight of an EP(D)M rubber and from 70 to 0 parts by weight of another rubber.

8. A process according to one of the preceding claims, characterized in that the rubber composition additionally comprises vulcanization retardants, anti-ageing agents, processing auxiliaries, mould release agents and/or blowing agents.

9. A process according to one of the preceding claims, characterized in that the composite is prepared in the one-stage or in the two-stage process, the material temperature of the rubber mixture in the cylinder being in the range from 40 to 80°C and the vulcanization temperature being in the range from 140 to 200°C.

10. A composite article produced according with one of the preceding claims.

## Revendications

1. Procédé de préparation d'objets composites en au moins un composant dur et au moins un composant mou, dans lequel le composant dur est à base de polyester thermoplastique et le composant mou est un vulcanisat,
caractérisé en ce que
a) le polyester thermoplastique renferme des doubles liaisons aliphatiques et,
b) le vulcanisat est préparé dans les conditions usuelles de vulcanisation en contact avec le composant dur par vulcanisation d'une composition de caoutchouc qui renferme les composants suivants :
I. 100 parties en poids d'un caoutchouc,
II. de 0 à 300 parties en poids de substance de charge,
III. de 1 à 10 parties en poids d'agent de vulcanisation peroxydique,
IV. de 0 à 4 parties en poids d'activateurs de vulcanisation,
V. de 0 à 150 parties en poids d'agent plastifiant, ainsi que,
VI. de 0,5 à 10 parties en poids d'un silane de formule :
X ― R¹ ― Si(OR²)₃
dans laquelle R¹ est un radical quelconque divalent ou une liaison directe alors que R² signifie de l'hydrogène, un alkyle, un cycloalkyle ou un aryle, respectivement éventuellement substitués, avec à chaque fois au maximum 20 atomes de carbone, et
X est choisi parmi les deux formules suivantes : 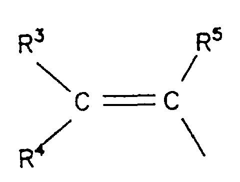 ou 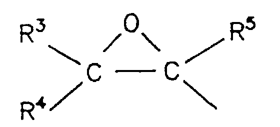 dans lesquelles R³, R⁴ et R⁵ indépendamment l'un de l'autre ont les mêmes significations que R² ou signifient un groupe -COOR².

2. Procédé selon la revendication 1,
caractérisé en ce que
le composant dur est un polyester, une masse moulée de polyester, un mélange de polyester ou un matériau composite de fibres avec une matrice en polyester.

3. Procédé selon l'une des revendications précédentes,
caractérisé en ce que
le composant dicarboxylique du polyester thermoplastique contenant des doubles liaisons aliphatiques est à base d'acide téréphtalique.

4. Procédé selon la revendication 3,
caractérisé en ce que
le composant diol consiste pour 0 à 99,9 % molaire en du butanediol-(1,4) et pour 0,1 à 100 % molaire en du butènediol-(1,4), de préférence pour 50 à 99 % molaire en du butane-diol-(1,4) et pour 1 à 50 % molaire en du butènediol-(1,4).

5. Procédé conformément à l'une des revendications précédentes,
caractérisé en ce qu'
on met en oeuvre de 1 à 8 parties en poids d'un silane, de préférence de 2 à 6 parties en poids rapporté à 100 parties en poids de caoutchouc.

6. Procédé conformément à l'une des revendications précédentes,
caractérisé en ce que
le caoutchouc est un caoutchouc EP(D)M, E-SBR, L-SBR, BR, NR, IR, IIR, CIIR, BIIR, NBR, CR ; un copolymère en blocs contenant du styrène, et/ou un polyalkénylène.

7. Procédé conformément à l'une des revendications précédentes,
caractérisé en ce que
le caoutchouc consiste en 30 à 100 parties en poids d'un caoutchouc EP(D)M et en 70 à 0 parties en poids d'un autre caoutchouc.

8. Procédé conformément à l'une des revendications précédentes,
caractérisé en ce que
la composition du caoutchouc renferme en outre des retardateurs de vulcanisation, des agents de protection contre le vieillissement, des adjuvants de façonnage, des agents de démoulage et/ou des agents propulseurs.

9. Procédé conformément à l'une des revendications précédentes,
caractérisé en ce que
le composite est fabriqué dans un processus à une étape ou à deux étapes, dans lequel la température de masse du mélange de caoutchouc se situe dans le cylindre dans la plage comprise entre 40 et 80°C et la température de vulcanisation dans la plage comprise entre 140 et 200°C.

10. Objets composites fabriqués selon l'une des revendications précédentes.
